# EUROPÄISCHE PATENTSCHRIFT

(11) **EP 2 250 598 B1**
(45) Veröffentlichungstag und Bekanntmachung des Hinweises auf die Patenterteilung: **18.04.2018**
(21) Anmeldenummer: 09714971.0
(22) Anmeldetag: 05.02.2009
(51) Int. Cl.: G06F 21/41, H04L 29/06

(54) **CLIENT/SERVER-SYSTEM ZUR KOMMUNIKATION GEMÄSS DEM STANDARDPROTOKOLL OPC UA UND MIT SINGLE SIGN-ON MECHANISMEN ZUR AUTHENTIFIZIERUNG SOWIE VERFAHREN ZUR DURCHFÜHRUNG VON SINGLE SIGN-ON IN EINEM SOLCHEN SYSTEM**
CLIENT/SERVER SYSTEM FOR COMMUNICATING ACCORDING TO THE STANDARD PROTOCOL OPC UA AND HAVING SINGLE SIGN-ON MECHANISMS FOR AUTHENTICATING, AND METHOD FOR PERFORMING SINGLE SIGN-ON IN SUCH A SYSTEM
SYSTÈME CLIENT/SERVEUR DE COMMUNICATION SELON LE PROTOCOLE STANDARD OPC UA COMPORTANT DES MÉCANISMES D'AUTHENTIFICATION SINGLE SIGN-ON ET PROCÉDÉ D'EXÉCUTION DE SINGLE SIGN-ON DANS CE SYSTÈME

(30) Priorität: 26.02.2008 DE 102008011191
(43) Veröffentlichungstag der Anmeldung: 17.11.2010
(73) Patentinhaber: ABB Research Ltd., 8050 Zürich (CH)
(72) Erfinder: LEITNER, Stefan, H., 69124 Heidelberg (DE)
(74) Vertreter: Marks, Frank
(86) Internationale Anmeldenummer: PCT/EP2009/000772
(87) Internationale Veröffentlichungsnummer: WO 2009/106214

(56) Entgegenhaltungen:
- WO-A-01/11450
- WO-A-2007/068716
- US-A1- 2004 098 615
- STEFAN-HELMUT LEITNER ET AL: "OPC UA Service-oriented Architecture for Industrial Applications" GEMEINSAMER WORKSHOP DER FACHGRUPPEN OBJEKTORIENTIERTE SOFTWAREENTWICKLUNG (OOSE), SOFTWARE-REENGINEERING (SRE) UND SOFTWARE-ARCHITEKTUREN (SW-ARCH) AM 27. OKTOBER 2006 IN LADENBURG,, [Online] 27. Oktober 2006 (2006-10-27), XP007909798 Gefunden im Internet: URL:http://pi.informatik.uni-siegen.de/stt /26_4/01_Fachgruppenberichte/OR A2006/01_ORA2006-Bericht.pdf> [gefunden am 2009-09-16]
- CHU S ET AL: "WEB-BASED SINGLE SIGN-ON SOLUTIONS: AN SSO PRODUCT MATRIX" COMPUTER SECURITY JOURNAL, CSI COMPUTER SECURITY INSTITUTE, XX, Bd. 16, Nr. 1, 1. Januar 2000 (2000-01-01), Seiten 39-49, XP008021056 ISSN: 0277-0865

## Beschreibung

Die Erfindung bezieht sich auf ein Verfahren und eine Einrichtung zur Integration von Mechanismen zur Benutzer-Authentifizierung und- Autorisierung in Anwendungen gemäß dem Standardprotokoll OPC UA. Das Verfahren und die Einrichtung sind für unterschiedliche Anwendungen geeignet, insbesondere zur Kommunikation in Systemen der Automatisierungstechnik.

OPC UA ist ein neues Standardprotokoll zur Hersteller-und Plattform-unabhängigen Kommunikation, insbesondere in der Prozessautomatisierung, spezifiziert durch die OPC Foundation. Der ursprüngliche Name für OPC war zwar OLE for Process Control, OPC wird aber inzwischen ohne einen Hinweis auf eine Abkürzung benutzt. UA steht für Unified Architecture. Nachstehend werden manchmal englischsprachige Begriffe benutzt, da sie bestimmte im Standard definierte Funktionen oder Spezifikationen umschreiben.

Die Veröffentlichung
STEFAN-HELMUT LEITNER ET AL: "OPC UA Service-oriented Architecture for Industrial Applications" GEMEINSAMER WORKSHOP DER FACHGRUPPEN OBJEKTORIENTIERTE SOFTWAREENTWICKLUNG (OOSE), SOFTWARE-REENGINEERING (SRE) UND SOFTWARE-ARCHITEKTUREN (SW-ARCH) AM 27. OKTOBER 2006 IN LADENBURG" [Online] 27. Oktober 2006 (2006-10-27), XP007909798
offenbart ein Client/Server-System mit Kommunikation gemäß dem Standardprotokoll OPC UA, wobei im System mittels eines Kommunikations-Netzwerks ein OPC UA Client mit einem OPC UA Aggregating Server und dieser wiederum mit unterlagerten OPC UA Servern verbunden ist.

Das Patentdokument WO 2007/068716 A offenbart ein Verfahren, beispielsweise für Behörden, um mittels eines Rechners über Drittanbieter kundenbezogene Authentifizierungen durchzuführen.

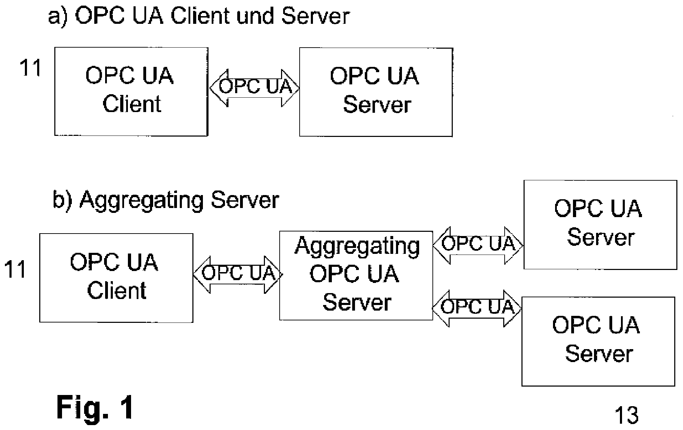

In Fig. 1 ist zunächst unter a) eine bekannte Anordnung zur Interaktion gemäß OPC-UA-Spezifikation zwischen einem OPC UA Client 11 und einem OPC UA Server 13 unter Verwendung eines Kommunikationssystems 12, typisch eines Netzwerks, dargestellt. Dabei benutzt der OPC UA Client 11 zur Interaktion OPC UA Service Calls aus einem Satz von OPC UA Service Calls, die im OPC-UA-Protokoll spezifiziert sind. Ein OPC UA Server kann aber auch als Aggregating Server arbeiten, wie in Fig. 1 unter b) dargestellt ist. Ein solcher Aggregating OPC UA Server 14 kann als

Client für andere, unterlagerte OPC UA Server 13 wirken, und Daten, die diese anderen OPC UA Server 13 bereitstellen, sammeln und in seinem eigenen Adressraum zur Verfügung stellen.

Das Anwendungsgebiet für OPC UA Clients und Server umfasst einen großen Bereich, und ihre Funktion kann in unterschiedlichen Geräten und Systemen implemenreich, und ihre Funktion kann in unterschiedlichen Geräten und Systemen implementiert werden, wie z. B. Controller, PC-basierten Steuerungssystemen, Fertigungsmanagementsystemen oder in der Produktionsplanung.

Im Standardprotokoll OPC UA sind allerdings keine Mechanismen zur Authentifizierung und Autorisierung von Benutzern in einem Szenario mit Aggregating Servern definiert. Die Spezifikation besagt lediglich, dass Aggregating Server mehrere Benutzer haben können, die als ihre agents wirken, und die genutzt werden können um voneinander unabhängige Sessions in Verbindung mit den anderen Servern einzurichten. Vor allem ist nicht spezifiziert, welchen Bezug die Identität eines Client-Benutzers zu Identitäten im Aggregating Server hat. Das bedeutet, dass es freigestellt ist, ob es so eingerichtet wird, dass Client-Identitäten mit Identitäten der anderen Server übereinstimmen, oder ob stattdessen unabhängige übergeordnete Nutzer für den Zugriff auf Aggregating Server gebildet werden.

Um ein geeignetes Sicherheitsniveau in OPC UA Systemen zu erreichen, ist es wichtig eine feinkörnige Zugriffskontrolle für Nutzer zu unterstützen, und dem festgelegten "geringste Rechte"-Schutz (engl. least privileges) für jeden Nutzer der auf Daten zugreift zu entsprechen. Ein Konzept mit übergeordneten Nutzern im Aggregating Server für Client-Identitäten würde die Entwurfsziele durchbrechen.

Wünschenswert wären in OPC UA Systemen Mechanismen für sogenanntes Single Sign-On. Single Sign-On (SSO) Mechanismen ermöglichen einem Benutzer nach einer Eingangs-Authentifizierung einen Zugriff auf alle Anwendungen und Daten, entsprechend einer zuvor definierten individuellen Erlaubnis. Es entfällt für den Benutzer vorteilhaft eine nochmalige Anmeldung innerhalb eines Computersystems.

In der Informationstechnologie sind zwar unterschiedliche Arten von Standardlösungen für Single Sign-On bekannt. Aber diese SSO-Lösungen können in OPC-UA-Produkten nicht verwendet werden, weil sie auf einem zentralen Authentifizierungs-Server basieren, wobei ein Logon (Anmelden) eines Nutzers über ein web-interface nötig ist, und der Server die Zugriffsberechtigung für einen vordefinierten Satz von Anwendungen vergibt. Solche Authentifizierungs-Server nutzen http oder andere Web-Protokolle um Nutzer zu identifizieren und Zugriffsberechtigungen für andere Anwendungen zu vergeben. Ein Problem besteht dabei darin, dass http oder andere Web-Protokolle in Automatisierungs-Netzwerken nicht immer erlaubt oder verfügbar sind, und außerdem nicht jede OPC UA Anwendung eine web application ist. Das schwerwiegendste Problem könnte jedoch darin bestehen, dass der Authentifizierungs-Server das OPC-UA-Protokoll verstehen müsste, um einen Nutzer für einen OPC UA Server zu authentifizieren. Dies ist aber bei derzeit marktgängigen Produkten nicht der Fall.

Davon ausgehend liegt der Erfindung die Aufgabe zugrunde, ein Verfahren und eine Einrichtung anzugeben, um eine Möglichkeit zur Integration von Single-Sign-On-Mechanismen in OPC-UA-Anwendungen zu schaffen.

Diese Aufgabe wird gelöst durch ein Verfahren zur Kommunikation zwischen Clients und Servern unter Verwendung des OPC-UA-Protokolls, das die im Anspruch 1 angegebenen Merkmale aufweist. Vorteilhafte Ausgestaltungen und eine entsprechende Einrichtung sind in weiteren Ansprüchen angegeben.

Beim erfindungsgemäßen Verfahren überträgt ein OPC UA Client alle als Berechtigungsnachweis erforderlichen Legitimationsdaten (credentials) eines Systembenutzers an einen OPC UA Aggregating Server. Dieser authentifiziert den spezifischen Benutzer automatisiert gegenüber allen mit dem Aggregating OPC UA Server verbundenen OPC UA Servern. Es ist sowohl die Nutzung unterschiedlicher Arten von Benutzer-Datenbasen und Einrichtungen, als auch eine transparente automatisierte Authentifizierung und eine feinkörnige Zugangskontrolle in einem System mit OPC UA Aggregating Server und damit verbundenen unterlagerten OPC UA Servern ermöglicht. Die dazu erforderliche erfindungsgemäße Integration von Single Sign-On Mechanismen ist realisiert mittels einer in den Aggregating OPC UA Server installierten SSO-Komponente zur Abwicklung der Mechanismen. Diese SSO-Komponente wird genutzt zur Authentifizierung des am OPC UA Client arbeitenden Benutzers gegenüber allen mit dem OPC UA Aggregating Server verbundenen OPC UA Servern, die auch als aggregated server bezeichnet werden. Die SSO-Komponente ist dafür eingerichtet, von OPC UA Clients und im OPC UA Aggregating Server benutzte Nutzer-Identitäten abzubilden oder umzusetzen (mapping) auf solche Identitäten, die in den mit dem OPC UA Aggregating Server verbundenen OPC UA Servern gespeichert sind. Die SSO-Komponente ruft dann jeweils einen ActivateSession service in allen mit dem OPC UA Aggregating Server verbundenen OPC UA Servern mittels der abgebildeten Legitimationsdaten (credentials) auf.

Eine weitere Erläuterung der Erfindung und deren Vorteile ergibt sich aus der nachstehenden Beschreibung eines Ausführungsbeispiels anhand der Zeichnungsfiguren.

Es zeigen:
- **Fig. 1**: unter a) eine Anordnung mit OPC UA Client und OPC UA Server, sowie unter b) eine Anordnung mit OPC UA Aggregating Server, jeweils gemäß dem Stand der Technik,
- **Fig. 2**: eine erfindungsgemäße Anordnung mit integrierten Single Sign-On (SSO) Mechanismen in einer OPC UA Anwendung,
- **Fig. 3**: ein Ablaufdiagramms, das mit der Anordnung gemäß Fig. 2 korrespondiert, und
- **Fig. 4**: ein alternatives Ablaufdiagramm, das ebenfalls mit der Anordnung gemäß Fig. 2 korrespondiert.

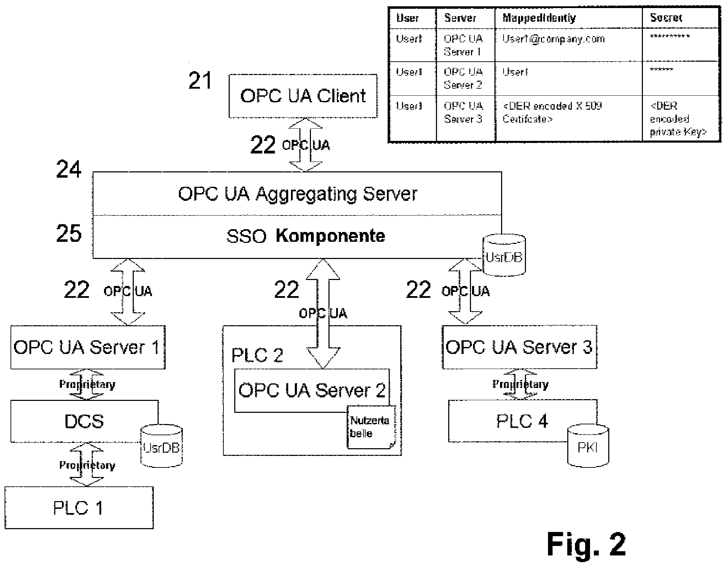

**Fig. 2** zeigt beispielhaft eine erfindungsgemäße Anordnung mit integrierten Single Sign-On (SSO) Mechanismen in einer OPC UA Anwendung. In diesem System enthält ein OPC UA Aggregating Server 24 eine SSO-Komponente 25 zur Authentifizierung des jeweiligen an einem OPC UA Client 21 arbeitenden Nutzers, z. B. des Users 1 gegenüber unterlagerten OPC UA Servern 1, 2 und 3. Sowohl der OPC UA Client 21, als auch die ebenfalls mit dem OPC UA Aggregating Server 24 zusammenwirkenden OPC UA Server 1, 2 und 3 sind mittels einem Kommunikations-Netzwerk 22 mit dem OPC UA Aggregating Server 24 verbunden. Die OPC UA Server 1, 2 und 3 haben im Beispiel jeweils auf Daten-Provider unterschiedlicher Art und mit unterschiedlichen Informationen und credentials Zugriff. Der OPC UA Server 1 liefert z. B. Daten aus einem PLC, die über ein Prozessleitsystem (Distributed Control System) mit einer zentralen Nutzerdatenbank, z. B. Active Directory System, bereitgestellt werden. Im OPC UA Server 2 läuft eine embedded application auf einem PLC mit einer einfachen Nutzertabelle im Speicher des Controllers des PLCs. Der OPC UA Server 3, der z. B. auf einer Linux-Maschine installiert sein könnte, hat schließlich Zugriff auf einen PLC, der mit einer Public-Kay Infrastruktur (PKI) arbeitet, wobei Benutzer mit Hilfe von digitalen Zertifikaten authentifiziert und autorisiert werden.

Die SSO-Komponente 25 ist mit einem Datenspeicher verbunden, der Informationen über alle in den OPC UA Servern 1, 2 und 3 verfügbaren Identitäten enthält, und bildet diese ab auf die vom Benutzer am OPC UA Client 21 verwendete spezifische Identität. Im Beispiel gemäß Fig. 2 ist ein User 1 dargestellt und genutzt für eine Logon-Prozedur im OPC UA Client 21. Der User 1 wird dabei im Datenspeicher der SSO-Komponente 25 abgebildet mit der Nutzer-Domäne User1@company.com gemäß OPC UA Server 1, sowie als User 1 wie in der Nutzertabelle des OPC UA Servers 2 definiert, und mittels einem spezifischen X.509-Zertifikat, das in der Certificate Trust List der PKI im PLC 4 des OPC UA Servers 3 enthalten ist. Der Datenspeicher der SSO-Komponente 25 unterstützt alle Typen von Identitäten, die im OPC UA Standard spezifiziert sind, und ermöglicht die Verwendung unterschiedlicher Arten von Anwender-Datenbanken in den verbundenen OPC UA Servern 1 bis 3.

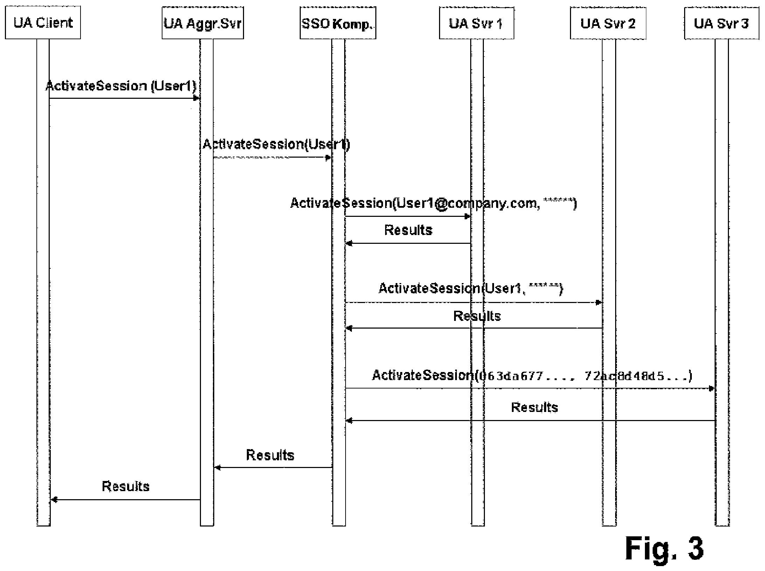

Anhand des in **Fig. 3** beispielhaft dargestellten Ablaufdiagramms, das mit der Anordnung gemäß Fig. 2 korrespondiert, wird das erfindungsgemäße Verfahren nachstehend weiter erläutert.

Wenn ein OPC UA Client versucht eine Verbindung mit dem OPC UA Aggregating Server herzustellen, dann richtet er zunächst einen secure channel (sicheren Kanal) und eine Session (Sitzung) ein, mittels der in einem SecureChannel service set und in einem Session service set standardisierten Services. Grundsätzlich stehen vier unterschiedliche Vorgehensweisen zur Durchführung dieser Vorbereitungsschritte zur Verfügung, von denen eine zu wählen ist, abhängig von den Erfordernissen des jeweiligen konkreten OPC UA Produkts.

Gemäß einer ersten Vorgehensweise leitet der Aggregating Server jeden Service-Aufruf (service call) zur Herstellung einer Verbindung an die unterlagerten OPC UA Server weiter, mit Ausnahme des ActivateSession service calls, der an die SSO-Komponente weitergeleitet wird.

Bei einer zweiten Vorgehensweise wird zuerst der secure channel eingerichtet und session services aufgerufen ohne diese, mit Ausnahme der ActivateSession service calls an den Aggregating Server weiterzuleiten. Der ActivateSession service call ist der Trigger für den Aufruf der secure channel and session services der unterlagerten OPC UA Server, wobei der ActivateSession service call dann an die SSO-Komponente weitergeleitet wird.

Eine dritte Vorgehensweise besteht darin, zunächst den secure channel und eine Session zwischen dem OPC UA Client und dem Aggregating Server einzurichten. Jedes Mal wenn der Client versucht auf Daten zuzugreifen, richtet der Aggregating Server eine Verbindung zu demjenigen OPC UA Server ein, der die gewünschten Daten enthält. Der ActivateSession service call wird an die SSO-Komponente weitergeleitet.

Bei einer vierten Vorgehensweise wird ebenfalls zunächst ein Sicherheitskanal und eine Session zwischen dem OPC UA Client und dem Aggregating Server eingerichtet. Wenn der Client das erste Mal versucht auf Daten zuzugreifen richtet der Aggregating Server Verbindungen zu den OPC UA Servern ein. Diese eingerichteten Verbindungen werden beendet wenn der OPC UA Client seine Verbindung zum Aggregating Server beendet, oder wenn die Verbindung des OPC UA Clients wegen time out beendet wird.

Die einzelnen Vorgehensweisen haben unterschiedliche Vor- und Nachteile. Die dritte Vorgehensweise belegt Ressourcen der OPC UA Server nur für kurze Zeit, aber führt zu einem großen overhead bei der Einrichtung eines Sicherheitskanals und der Session, wenn Services für den Datenzugriff durch den OPC UA Server häufig aufgerufen werden.

Die zweite Vorgehensweise erfordert z. B. eine länger andauernde Belegung von Ressourcen der OPC UA Server als die dritte Vorgehensweise, weil der secure channel und die Session nur einmalig für eine Client Session einzurichten sind, es wird aber nur ein kleinerer overhead verursacht, weil ja der secure channel und die Session nur einmalig für eine Client Session einzurichten sind. Jedoch müssen secure channel and session service calls im Speicher des Aggregating Servers gehalten werden bis die secure channels und Sessions zu den unterlagerten OPC UA Servern eingerichtet sind.

Die erste Vorgehensweise ist am einfachsten zu implementieren, kann aber bezüglich Ressourcenverbrauchs problematisch sein, wenn ein ActivateSession service call vom Aggregating Server zurückgewiesen wurde weil die weitergeleiteten Legitimationsdaten (credentials) ungültig sind. In diesem Fall sind secure channel und Session bereits eingerichtet (aber nicht aktiviert) für alle OPC UA Server.

Die vierte Vorgehensweise ist ein guter Kompromiss zwischen Ressourcenbelegung in den OPC UA Servern und dem overhead zur Einrichtung von secure channels und Sessions, weil sie nur eingerichtet werden wenn ein Client auf Daten zugreifen will, und offengehalten werden bis der OPC UA Client die Verbindung zum Aggregating-Server beendet.

Wie oben erwähnt, werden die Benutzer-Legimitationsdaten (credentials) mittels dem im Session service set definierten ActivateSession service call dem Aggregating Server zur Verfügung gestellt. Danach gibt der Aggregating Server diesen Service-Aufruf an die SSO-Komponente weiter. Die SSO-Komponente sucht die weitergegebene Benutzer-Identität in ihrem Datenspeicher und sucht nach abgebildeten Identitäten sowie nach betroffenen OPC UA Servern. Für jede Übereinstimmung ruft die SSO-Komponente beim jeweiligen OPC UA Server den ActivateSession service mittels der abgebildeten Benutzer-Identität auf.

Im Beispiel gemäß Fig. 2 und Fig. 3 ruft die SSO-Komponente den ActivateSession service mittels User1@company.com und dem zugehörigen password beim OPC UA Server 1 auf, entsprechend mittels User1 und dem zugehörigen password beim OPC UA Server 2, und schließlich beim OPC UA Server 3 mittels DER-codierten Bytes des X.509 Zertifikats und deren Signatur, die mit dem private key des Zertifikatausstellers gebildet wurden.

Wenn dem Aggregating Server mittels Results zurückgemeldet wird dass alle ActivateSession Service calls erfolgreich waren, dann ist der Benutzer sowohl beim Aggregating Server als auch bei den unterlagerten OPC UA Servern authentifiziert, und der Aggregating Server bestätigt dies dem OPC UA Client.

Es kann auch der Fall eintreten, dass die Authentifizierung eines Benutzers bei einem der unterlagerten OPC UA Servern fehlschlägt, z. B. wenn die Legimitationsdaten des Benutzers dafür nicht mehr gültig sind. Solange der Benutzer wenigstens bei einem der unterlagerten OPC UA Servern authentifiziert werden kann, kann der Benutzer immerhin auf Daten in dem betreffenden Server oder den betreffenden Servern zugreifen.

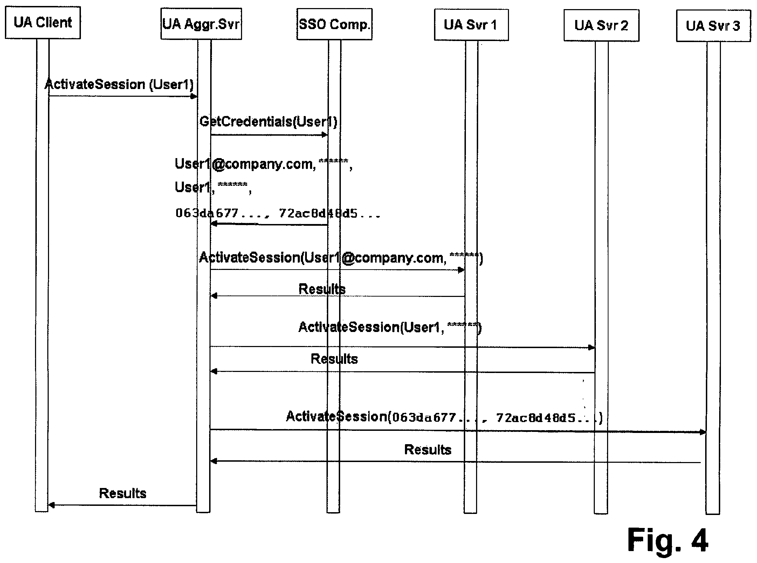

**Fig. 4** zeigt ein Ablaufdiagramm zu einer möglichen Verfahrensvariante, ebenfalls korrespondierend zur Anordnung gemäß Fig. 2. Dabei ist dargestellt, dass ein ActivateSession service call für einen User 1 vom OPC UA Client zum OPC UA Aggregating Server übertragen wird. Der Aggregating Server ermittelt lediglich über eine proprietäre Schnittstellenfunktion der SSO-Komponente die abgebildeten (mapped) Legitimationsdaten des betreffenden Benutzers, hier User 1. Der Aggregating Server ruft dann direkt die ActivateSession services bei den unterlagerten OPC UA Servern auf. Diese Verfahrensvariante vereinfacht die Abwicklung der internen Kommunikation, weshalb auch auf eine SSO-Komponente verzichtet werden könnte. Das erforderliche Multiplexing des ActivateSession service calls könnte in jedem OPC UA Server durchgeführt werden, der SSO unterstützt. Nimmt man also diese Funktionalität aus einer SSO-Komponente heraus, die aber in jedem OPC UA Server wiederverwendet werden könnte, so müsste diese Funktionalität in jedem OPC UA Server erneut implementiert werden.

Eine weitere, jedoch nicht in einer Zeichnungsfigur dargestellte Variante zur vorbeschriebenen Einrichtung und zum Verfahren könnte darin bestehen, ein Konzept mit super-users als agents für den Aggregating Server einzuführen. Bei dieser Variante wird für jeden Aufbau einer Client-Verbindung zum Aggregating Server ein superuser mit allen Zugriffsrechten auf Daten in allen unterlagerten OPC UA Servern benutzt. Das bedeutet, dass der Aggregating Server unabhängig von der Benutzer-Identität eine spezielle Identität für den Aufbau von Verbindungen zu den unterlagerten OPC UA Servern wählt.

Eine solche Lösung führt zu einem einfacheren Nutzer-Management im Aggregating Server, verstößt aber gegen allgemeine Entwurfsregeln für least-privileges. Außerdem führt es zu höheren Sicherheitsrisiken, falls ein Hacker erfolgreich wäre beim hijacking einer Session des Aggregating Servers. Er hätte immer Zugriff auf alle unterlagerten OPC UA Server.

## Patentansprüche

1. Verfahren zur Integration von Single Sign-On Mechanismen in ein Client/Server-System mit Kommunikation gemäß dem Standardprotokoll OPC UA, und zur Durchführung von Single Sign-On zur Benutzer-Authentifizierung in einem solchen System, wobei im System mittels eines Kommunikations-Netzwerks (22) ein OPC UA Client (21) mit einem OPC UA Aggregating Server (24), und dieser wiederum mit unterlagerten OPC UA Servern (1, 2, 3) verbunden ist, und wobei
- zur Integration von Single Sign-On Mechanismen der OPC UA Aggregating Server (24) ergänzt wird durch eine SSO-Komponente (25) zur Abbildung von Benutzer-Legitimationsdaten (credentials) - die bei einem Service-Aufruf benutzt werden - auf Identitäten in der Form, in der sie in den unterlagerten OPC UA Servern (1, 2, 3) gespeichert sind, und
- zur Durchführung von Single Sign-On mit Hilfe der SSO-Komponente (25) zu einem Service-Aufruf gehörige Benutzer-Legitimationsdaten dazu verwendet werden, um automatisiert nach entsprechenden abgebildeten Identitäten und nach betroffenen OPC UA Servern (1, 2, 3) zu suchen, und für jede Übereinstimmung beim jeweiligen OPC UA Server (1, 2, 3) mittels der abgebildeten Identität einen ActivateSession service aufzurufen, wonach der mit dem Service-Aufruf des Benutzers gewünschte Zugriff auf Daten hergestellt wird.
**dadurch gekennzeichnet,**
**dass** zur Durchführung von Single Sign-On auf Grund eines vom OPC UA Client (21) ausgehenden Service-Aufrufes
- zunächst zwischen OPC UA Client (21) und OPC UA Aggregating Server (24) mittels standardmäßigen, in einem SecureChannel service set und einem Session service set definierten Services ein Secure Channel und eine Session eingerichtet werden, danach
- dem OPC UA Aggregating Server (24) mittels einem standardmäßigen, im Session service set definierten ActivateSession service call Benutzer-Legitimationsdaten (credentials) zur Verfügung gestellt werden,
- der Service-Aufruf und die Benutzer-Legitimationsdaten an die SSO-Komponente (25) weitergeleitet werden, und
- die SSO-Komponente (25) die Benutzer-Legitimationsdaten dazu verwendet um nach übereinstimmenden gespeicherten abgebildeten (mapped) Nutzer-Identitäten und nach betroffenen OPC UA Servern (1, 2, 3) zu suchen, und für jede Übereinstimmung beim jeweiligen OPC UA Server (1, 2, 3) mittels der abgebildeten Identität den ActivateSession service aufzurufen.

2. Client/Server-System, das für eine Kommunikation gemäß dem Standard Protokoll OPC UA und für Single Sign-On eingerichtet ist, und bei dem
- mittels eines Kommunikations-Netzwerks (22) ein OPC UA Client (21) mit einem OPC UA Aggregating Server (24) und dieser wiederum mit unterlagerten OPC UA Servern (1, 2, 3) verbunden ist, und
- der OPC UA Aggregating Server (24) mittels einer SSO-Komponente(25) mit Single Sign-On (SSO) Mechanismen für eine Benutzer-Authentifizierung eingerichtet ist.

3. Client/Server-System nach Anspruch 2, **dadurch gekennzeichnet, dass** die SSO-Komponente (25) dafür eingerichtet ist, auf gespeicherte Informationen über alle in den OPC UA Servern (1, 2, 3) verfügbaren Nutzer-Identitäten zuzugreifen und diese abzubilden auf die von Benutzern am OPC UA Client (21) verwendeten Identitäten.

4. Client/Server-System nach Anspruch 2 oder 3, **dadurch gekennzeichnet, dass**
- der OPC UA Client (21) und der OPC UA Aggregating Server (24) dafür eingerichtet sind, mittels eines standardmäßigen, in einem Session service set definierten ActivateSession service calls Benutzer-Legitimationsdaten (credentials) dem OPC UA Aggregating Server (24) und der SSO-Komponente (25) zur Verfügung zu stellen,
- die SSO-Komponente (25) dafür eingerichtet ist, die Benutzer-Legitimationsdaten dazu zu verwenden um nach übereinstimmenden abgebildeten Identitäten und nach betroffenen OPC UA Servern (1, 2, 3) zu suchen, und für jede Übereinstimmung beim jeweiligen OPC UA Server (1, 2, 3) mittels der abgebildeten Identität den ActivateSession service aufzurufen.

## Claims

1. Method for integrating single sign-on mechanisms in a client/server system with communication according to the standard protocol OPC UA and for performing single sign-on for user authentication in such a system, wherein, in the system, an OPC UA client (21) is connected to an OPC UA aggregating server (24) and the latter is in turn connected to subordinate OPC UA servers (1, 2, 3) by means of a communication network (22), and wherein,
- in order to integrate single sign-on mechanisms, the OPC UA aggregating server (24) is supplemented with an SSO component (25) for mapping user legitimation data (credentials) - which are used in a service call - to identities in the form in which they are stored in the subordinate OPC UA servers (1, 2, 3), and,
- in order to perform single sign-on with the aid of the SSO component (25), user legitimation data belonging to a service call are used to automatically look for corresponding mapped identities and for affected OPC UA servers (1, 2, 3) and, for each match, to call an ActivateSession service in the respective OPC UA server (1, 2, 3) using the mapped identity, after which the data access desired with the user's service call is established,
**characterized in that**,
in order to perform single sign-on on the basis of a service call originating from the OPC UA client (21),
- a secure channel and a session are first of all set up between the OPC UA client (21) and the OPC UA aggregating server (24) using standard services defined in a secure channel service set and a session service set,
- the OPC UA aggregating server (24) is then provided with user legitimation data (credentials) using a standard ActivateSession service call defined in the session service set,
- the service call and the user legitimation data are forwarded to the SSO component (25), and
- the SSO component (25) uses the user legitimation data to look for matching stored mapped user identities and for affected OPC UA servers (1, 2, 3) and, for each match, to call the ActivateSession service in the respective OPC UA server (1, 2, 3) using the mapped identity.

2. Client/server system which is set up for communication according to the standard protocol OPC UA and for single sign-on and in which
- an OPC UA client (21) is connected to an OPC UA aggregating server (24) and the latter is in turn connected to subordinate OPC UA servers (1, 2, 3) by means of a communication network (22), and
- the OPC UA aggregating server (24) is set up for user authentication using an SSO component (25) with single sign-on (SSO) mechanisms.

3. Client/server system according to Claim 2,
**characterized in that** the SSO component (25) is set up to access stored information relating to all user identities available in the OPC UA servers (1, 2, 3) and to map said identities to the identities used by users of the OPC UA client (21).

4. Client/server system according to Claim 2 or 3,
**characterized in that**
- the OPC UA client (21) and the OPC UA aggregating server (24) are set up to provide the OPC UA aggregating server (24) and the SSO component (25) with user legitimation data (credentials) using a standard ActivateSession service call defined in a session service set,
- the SSO component (25) is set up to use the user legitimation data to look for matching mapped identities and for affected OPC UA servers (1, 2, 3) and, for each match, to call the ActivateSession service in the respective OPC UA server (1, 2, 3) using the mapped identity.

## Revendications

1. Procédé destiné à l'intégration de mécanismes « Single Sign-On » (SSO) dans un système client/serveur, dans lequel la communication est réalisée selon le protocole standard « OPC UA », et destiné à la réalisation de mécanismes « Single Sign-On » en vue de l'authentification des utilisateurs dans un tel système ;
dans lequel un client « OPC UA » (21) est relié à un serveur d'agrégation « OPC UA » (24) dans le système au moyen d'un réseau de communication (22) et ledit serveur d'agrégation est relié à son tour à des serveurs « OPC UA » (1, 2, 3) de la couche inférieure ; et dans lequel
- dans le but de l'intégration des mécanismes « Single Sign-On », le serveur d'agrégation « OPC UA » (24) est complété par une composante SSO (25) en vue de la représentation des données de légitimation des utilisateurs (« credentials »), lesquelles sont utilisées dans le cas d'un appel de service, dans des identités sous la forme dans laquelle elles sont enregistrées dans les serveurs « OPC UA » (1, 2, 3) de la couche inférieure ; et
- les données de légitimation des utilisateurs qui appartiennent à un appel de service sont employées en vue de la réalisation des mécanismes « Single Sign-On » à l'aide de la composante SSO (25), dans le but de rechercher, de manière automatisée, des identités correspondantes représentées, et dans le but de rechercher des serveurs « OPC UA » (1, 2, 3) concernés, ainsi que dans le but d'appeler un service « ActivateSession » pour chaque concordance auprès du serveur « OPC UA » (1, 2, 3) respectif, au moyen de l'identité représentée, à la suite de quoi l'accès souhaité aux données est établi avec l'appel de service de l'utilisateur,
**caractérisé en ce que**,
en vue de la réalisation de mécanismes « Single Sign-On » sur la base d'un appel de service émis par le client « OPC UA » (21) :
- dans un premier temps, un canal sécurisé (« Secure Channel ») et une session sont mis en place entre le client « OPC UA » (21) et le serveur d'agrégation « OPC UA » (24) au moyen de services standard, lesquels sont définis dans un ensemble de services « SecureChannel » et un ensemble de services de session ; puis
- des données de légitimation des utilisateurs (« credentials ») sont mises à disposition du serveur d'agrégation « OPC UA » (24) au moyen d'un appel de service « ActivateSession » standard, lequel est défini dans un ensemble de services de session ;
- l'appel de service et les données de légitimation des utilisateurs sont retransmis à la composante SSO (25) ; et
- la composante SSO (25) utilise les données de légitimation des utilisateurs dans le but de rechercher les identités des utilisateurs représentées (« mapped »), enregistrées et concordantes, et dans le but de rechercher des serveurs « OPC UA » (1, 2, 3) concernés, ainsi que dans le but d'appeler un service « ActivateSession » pour chaque concordance auprès du serveur « OPC UA » (1, 2, 3) respectif, au moyen de l'identité représentée.

2. Système client/serveur, lequel est mis en place pour une communication selon le protocole standard « OPC UA » et pour des mécanismes « Single Sign-On » ; et pour lequel
- un client « OPC UA » (21) est relié à un serveur d'agrégation « OPC UA » (24) au moyen d'un réseau de communication (22) et ledit serveur d'agrégation est relié à son tour à des serveurs « OPC UA » (1, 2, 3) de la couche inférieure ; et dans lequel
- le serveur d'agrégation « OPC UA » (24) est mis en place au moyen d'une composante SSO (25) avec des mécanismes « Single Sign-On » (550) pour une authentification des utilisateurs.

3. Système client/serveur selon la revendication 2, **caractérisé en ce que** la composante SSO (25) est mise en place afin de permettre l'accès aux informations enregistrées, relatives à toutes les identités des utilisateurs qui sont disponibles dans les serveurs « OPC UA » (1, 2, 3) et de représenter ces informations dans des identités employées par les utilisateurs au niveau du client « OPC UA » (21).

4. Système client/serveur selon la revendication 2 ou 3, **caractérisé en ce que**
- le client « OPC UA » (21) et le serveur d'agrégation « OPC UA » (24) sont mis en place afin de mettre des données de légitimation des utilisateurs (« credentials ») à disposition du serveur d'agrégation « OPC UA » (24) et de la composante SSO (25), au moyen d'un appel de service « ActivateSession » standard, lequel est défini dans un ensemble de services de session ;
- la composante SSO (25) est mise en place en vue d'utiliser les données de légitimation des utilisateurs dans le but de rechercher des identités représentées concordantes et dans le but de rechercher des serveurs « OPC UA » (1, 2, 3) concernés, ainsi que dans le but d'appeler le service « ActivateSession » pour chaque concordance auprès du serveur « OPC UA » (1, 2, 3) respectif, au moyen de l'identité représentée.
